# EUROPEAN PATENT APPLICATION

(11) **EP 1 758 314 A1**
(43) Date of publication of application: **28.02.2007**
(21) Application number: 05721266.4
(22) Date of filing: 22.03.2005
(51) Int. Cl.: H04L 12/56, H04Q 7/38

(54) **COMMUNICATION APPARATUS**

(30) Priority: 30.04.2004 JP 2004135104
(71) Applicant: NEC CORPORATION, Minato-ku, Tokyo 108-8001 (JP)
(72) Inventor: SUDA, Yukinori, Minato-ku, Tokyo 1088001 (JP)
(74) Representative: Vossius & Partner
(86) International application number: PCT/JP2005/005166
(87) International publication number: WO 2005/107186

(57) **Abstract**

A communication apparatus plurally using the same and different types of lines, wherein the upper limit of a communication charge as calculated per hour from the upper limit of a predetermined monthly communication charge is compared with an actual communication charge as calculated per hour from the time that has passed since the start of a connection and from the number of transmitted/received packets as determined by a communication terminal, and if the actual communication charge exceeds the upper limit of the communication charge, then the packet transmission amount is reduced when using a line for which the charge increases with amount of packets; or alternatively the communication is disconnected when using a line for which the charge increases with time.

## Description

### [APPLICABLE FIELD IN THE INDUSTRY]

The present invention relates to a technology of selecting a line in a communication apparatus plurally and simultaneously connectable to radio communication systems of an identical type and a different type.

### [BACKGROUND ART]

There exists a mobile Inverse-MUX technology in which the communication apparatus for making a relay of a data packet plurally and simultaneously connects to narrow-bandwidth cellular radio communication systems such as a PDC (Personal Digital Cellular), a GSM (Global System for Mobile communications), a UMTS (Universal Mobile Telecommunication Systems, and a cdma2000, thereby allowing one wide-bandwidth logical link to be realized (for example, Non-patent document 1).

The communication system employing this Inverse-MUX technology, which necessitates connecting to a large number of the radio communication systems simultaneously in order to realize a wide-bandwidth line, could cost a communication charge beyond a service provider's expectations because, as a rule, the charging system in the cellular radio communication system is a system for which the charge increases with an amount of communication.

Thereupon, as a technique of selecting the line to which a connection is made for a purpose of suppress the communication charge, for example, the technologies described in Patent document 1 and Patent document 2 have been proposed.

[Non-patent document 1]
   Kazuhiro OKANOUE et al. "Internet Access for Vehicles (I)-Principle and System Structure-", THE INSTITUTE OF ELECTRONICS, INFORMATION AND COMMUNICATION ENGINEERS, PROCEEDINGS OF THE 2004 GENERAL CONFERENCE, B-5-163.
[Non-patent document 2]
   Tsuneo NAKATA et al. "Internet Access for Vehicles (2)-Flow Control-", THE INSTITUTE OF ELECTRONICS, INFORMATION AND COMMUNICATION ENGINEERS, PROCEEDINGS OF THE 2004 GENERAL CONFERENCE, B-5-164.
[Non-patent document 3] Masahiro ONO et al. "Internet Access for Vehicles (3)-Packet Re-transmission Control-", THE INSTITUTE OF ELECTRONICS, INFORMATION AND COMMUNICATION ENGINEERS, PROCEEDINGS OF THE 2004 GENERAL CONFERENCE, B-5-165.
[Patent document 1]
   JP-P2003-134031A
[Patent document 2]
   JP-P1999-187157A

### [DISCLOSURE OF THE INVENTION]

### [PROBLEMS TO BE SOLVED BY THE INVENTION]

However, the selection technique described in the foregoing Patent document 1 and Patent document 2, which is a technique of selecting one line for connecting to the radio system, cannot be utilized in the system for selecting the line for a purpose of simultaneously connecting to a plurality of radio systems of a different type like the case of the Inverse-MUX technique.

Further, even though the selection technique described in the Patent document 2 enables the communication charge to be reduced as much as possible, it is impossible to suppress the communication charge to be a predetermined upper limit or less.

Thereupon, the present invention has been accomplished in consideration of the above-mentioned problems, and an object thereof is to provide a technology that enables the communication charge to be suppressed to be within a target predetermined by the service provider while the line that connects to the radio communication system is increased as much as possible, stabilization of the logical link and widening of the bandwidth thereof are realized, and a target predetermined by the service provider is maintained in the communication system simultaneously connectable to a plurality of communication systems of an identical type and a different type.

### [MEANS TO SOLVE THE PROBLEM]

The first invention for solving the above-mentioned problems, which is a communication apparatus simultaneously connectable to a plurality of communication systems of an identical type and a different type including a communication system for which a charge increases with an amount of communication, is characterized in having:
an entire administration policy, being information of a target minimum of a communication rate or an upper limit of a communication charge obtained by integrating at least a plurality of communication systems;
a line-by-line administration policy, being information for administering each communication system;
communication line quality information, being quality information of a line of each communication system;
statistics information that becomes status information of a line of each communication system; and
a line selecting means for, based upon the line-by-line administration policy, communication line quality information, and statistics information, selecting a line of each communication system so as to satisfy the entire administration policy.

The second invention for solving the above-mentioned problems is characterized in, in the above-mentioned first invention, that:
the upper limit of the communication charge of the entire administration policy is an upper limit per hour;
the line-by-line administration policy includes a utilization priority degree and a connectable maximum line number set for each communication system;
the statistics information includes a transmitted/received packet number or a communication time of the communication apparatus; and
the line selecting means is configured to select and connects a line of a communication system having the line of which the utilization priority degree is high from among the communication systems in which a communication line quality that is obtained from the communication line quality information is at a communicable level, and yet the number of already-connected lines is less than the maximum line number in a case where an actual communication charge per hour calculated from the transmitted/received packet number or communication time is equal to or less than the upper limit per hour, and yet a communication rate calculated from the transmitted/received packet number is equal to or less than the target minimum of the communication rate.

The third invention for solving the above-mentioned problems is characterized in, in the above-mentioned first or second invention, that:
said upper limit of said communication charge of said entire administration policy is an upper limit per hour;
said line-by-line administration policy includes a utilization priority degree set for each communication system;
said statistics information includes a transmitted/received packet number or a communication time of said communication apparatus; and
said line selecting means is configured to select a line of a communication system of which said utilization priority degree is low from among the lines of the communication systems in connection, and to disconnect the line of the above communication system in a case where a communication rate calculated from said transmitted/received packet number or communication time is equal to or more than said target minimum of said communication rate, and yet an actual communication charge per hour calculated from said transmitted/received packet number or communication time is equal to or more than said upper limit per hour.

The fourth invention for solving the above-mentioned problems is characterized in, in the above-mentioned first to third invention, that:
said upper limit of said communication charge of said entire administration policy is an upper limit per hour;
said line-by-line administration policy includes a charging system and a utilization priority degree set for each communication system;
said statistics information includes a transmitted/received packet number or a communication time of said communication apparatus; and
said line selecting means is configured to select a line of a communication system of which said utilization priority degree is low from among the lines of the communication systems in connection in a case where a communication rate calculated from said transmitted/received packet number is equal to or more than said target minimum of said communication rate, and yet an actual communication charge per hour calculated from said transmitted/received packet number or communication time is equal to or more than said upper limit per hour, and to suppress a transmission rate in the line of said communication system so that said actual communication charge per hour does not exceed said upper limit per hour in a case where the charging system of this communication system is a system for which a charge increases with an amount of packets.

The fifth invention for solving the above-mentioned problems is characterized in, in the above-mentioned first to fourth invention, that:
said upper limit of said communication charge of said entire administration policy is an upper limit per hour;
said line-by-line administration policy includes a charging system, a charging rate, and a utilization priority degree set for each communication system;
said statistics information includes a transmitted/received packet number or a communication time of said communication apparatus; and
said line selecting means is configured to select a line of a communication system of which said utilization priority degree is low from among the already connected lines of the communication systems in a case where a communication rate calculated from said transmitted/received packet number or communication time is equal to or more than said target minimum of said communication rate, and yet an actual communication charge per hour calculated from said transmitted/received packet number or communication time is equal to or more than said upper limit per hour, and, in a case where the charging system of this communication system is a system for which a charge increases with an amount of packets, to suppress a transmission rate of the line of said communication system when a communication charge per hour calculated from the charging rate of the line of said communication system and the transmitted/received packet number of the line of said communication system is larger than a difference between said upper limit per hour and said actual communication charge per hour.

The sixth invention for solving the above-mentioned problems is characterized in, in one of the above-mentioned first to fifth invention, that:
said upper limit of said communication charge of said entire administration policy is an upper limit per hour;
said line-by-line administration policy includes a charging system, a charging rate, and a utilization priority degree set for each communication system;
said statistics information includes a transmitted/received packet number or a communication time of said communication apparatus; and
said line selecting means is configured to select a line of a communication system of which said utilization priority degree is low from among the already connected lines of the communication systems in a case where a communication rate calculated from said transmitted/received packet number is equal to or more than said target minimum of said communication rate, and yet an actual communication charge per hour calculated from said communication time or transmitted/received packet number is equal to or more than said upper limit per hour, and in a case where the charging system of this communication system is a system for which a charge increases with an amount of packets, to disconnect the line of said communication system only when a communication charge per hour calculated from the charging rate of the line of said communication system and the transmitted/received packet number of said communication system is equal to or less than a difference between said upper limit per hour and said actual communication charge per hour.

The seventh invention for solving the above-mentioned problems is characterized in, in one of the above-mentioned first to sixth invention, that:
said statistics information includes a transmitted/received packet number or a communication time of said communication apparatus; and
in a case where a communication charge calculated from said transmitted/received packet number or communication time is equal to or less than said upper limit of said communication charge, yet a communication rate calculated from said transmitted/received packet number is equal to or less than said target minimum of said communication rate, and yet a line having a transmission rate suppressed exists, said line selecting means is configured to remove a suppression of the transmission rate of said line having the transmission rate suppressed.

The eighth invention for solving the above-mentioned problems is characterized in, in one of the above-mentioned first to seventh invention, that:
said communication apparatus is mounted onto a mobile machine that moves; and
the entire administration policy of said communication apparatus differs responding to a vehicle occupancy ratio of said mobile machine.

The ninth invention for solving the above-mentioned problems is characterized in, in one of the above-mentioned first to eighth invention, that:
said communication apparatus is mounted onto a mobile machine that moves; and
the entire administration policy of said communication apparatus differs responding to a position of said mobile machine.

The tenth invention for solving the above-mentioned problems is characterized in that: a communication apparatus simultaneously connectable to a plurality of communication systems of an identical type and a different type including a communication system for which a charge increases with an amount of communication, characterized in comprising a line selecting means for, based upon a line-by-line administration policy, a communication line quality, and statistics information measured in the communication apparatus, deciding a communication system to which a connection is made.

The eleventh invention for solving the above-mentioned problem is characterized in that: a line selection method of a communication apparatus simultaneously connectable to a plurality of communication systems of an identical type and a different type including a communication system for which a charge increases with an amount of communication, characterized in comprising a line selection step of, based upon a line-by-line administration policy, being information for administering each communication system, communication line quality information, being quality information of a line of each communication system, and statistics information that becomes status information of a line of each communication system, selecting a line of each communication system so as to satisfy a target minimum of a communication rate or an upper limit of a communication charge, said target minimum and upper limit obtained by integrating a plurality of communication systems.

The twelfth invention for solving the above-mentioned problem is characterized in, in the above-mentioned eleventh inventions, that:
said upper limit of said communication charge of said entire administration policy is an upper limit per hour;
said line-by-line administration policy includes a utilization priority degree and a connectable maximum line number set for each communication system;
said statistics information includes a transmitted/received packet number or a communication time of said communication apparatus; and
said line selection step is a step of, in a case where an actual communication charge per hour calculated from said transmitted/received packet number or communication time is equal to or less than said upper limit per hour, and yet a communication rate calculated from said transmitted/received packet number is equal to or less than said target minimum of said communication rate, selecting and connect a line of a communication system having the line of which said utilization priority degree is high from among the communication systems in which a communication line quality that is obtained from said communication line quality information is at a communicable level, and yet the number of already connected lines is less than said maximum line number.

The thirteenth invention for solving the above-mentioned problem is characterized in that, in one of the above-mentioned eleventh or twelfth inventions,
said upper limit of said communication charge of said entire administration policy is an upper limit per hour;
said line-by-line administration policy includes a utilization priority degree set for each communication system;
said statistics information includes a transmitted/received packet number or a communication time of said communication apparatus; and
said line selection step is a step of, in a case where a communication rate calculated from said transmitted/received packet number or communication time is equal to or more than said target minimum of said communication rate, and yet an actual communication charge per hour calculated from said transmitted/received packet number or communication time is equal to or more than said upper limit per hour, selecting a line of a communication system of which said utilization priority degree is low from among the lines of the communication systems in connection, and disconnecting the line of the above communication system.

The fourteenth invention for solving the above-mentioned problem is characterized in that, in one of the above-mentioned eleventh to thirteenth inventions,
said upper limit of said communication charge of said entire administration policy is an upper limit per hour;
said line-by-line administration policy includes a charging system and a utilization priority degree set for each communication system;
said statistics information includes a transmitted/received packet number or a communication time of said communication apparatus; and
said line selection step is a step of, in a case where a communication rate calculated from said transmitted/received packet number or communication time is equal to or more than said target minimum of said communication rate, and yet an actual communication charge per hour calculated from said transmitted/received packet number or communication time is equal to or more than said upper limit per hour, selecting a line of a communication system of which said utilization priority degree is low from among the lines of the communication systems in connection, and in a case where a charging system of this communication system is a system for which the charge increases with an amount of packets, suppressing a transmission rate in the line of said communication system so that said actual communication charge per hour does not exceed said upper limit per hour.

The fifteenth invention for solving the above-mentioned problem is characterized in that, in one of the above-mentioned eleventh to fourteenth inventions,
said upper limit of said communication charge of said entire administration policy is an upper limit per hour;
said line-by-line administration policy includes a charging system, a charging rate, and a utilization priority degree set for each communication system;
said statistics information includes a transmitted/received packet number or a communication time of said communication apparatus; and
said line selection step is a step of, in a case where a communication rate calculated from said transmitted/received packet number or communication time is equal to or more than said target minimum of said communication rate, and yet an actual communication charge per hour calculated from said transmitted/received packet number or communication time is equal to or more than said upper limit per hour, selecting a line of a communication system of which said utilization priority degree is low from among the already connected lines of the communication systems, and in a case where the charging system of this communication system is a system for which a charge increases with an amount of packets, suppressing a transmission rate in the line of said communication system when a communication charge per hour calculated from the charging rate of the line of said communication system and the transmitted/received packet number of the line of said communication system is larger than a difference said upper limit per hour and said actual communication charge per hour.

The sixteenth invention for solving the above-mentioned problem is characterized in that, in one of the above-mentioned eleventh to fifteenth inventions,
said upper limit of said communication charge of said entire administration policy is an upper limit per hour;
said line-by-line administration policy includes a charging system, a charging rate, and a utilization priority degree set for each communication system;
said statistics information includes a transmitted/received packet number or a communication time of said communication apparatus; and
said line selection step is a step of, in a case where a communication rate calculated from said transmitted/received packet number is equal to or more than said target minimum of said communication rate, and yet an actual communication charge per hour calculated from said communication time or transmitted/received packet number is equal to or more than said upper limit per hour, selecting a line of a communication system of which said utilization priority degree is low from among the already connected lines of the communication systems, and in a case where the charging system for which a charge increases with an amount of packets, disconnecting the line of said communication system only when a communication charge per hour calculated from the charging rate of the line of said communication system and the transmitted/received packet number of the line of said communication system is equal to or less than a difference between said upper limit per hour and said actual communication charge per hour.

The seventeenth invention for solving the above-mentioned problem is characterized in that, in one of the above-mentioned eleventh to sixteenth inventions,
said statistics information includes a transmitted/received packet number or a communication time of said communication apparatus; and
said line selection step is a step of, in a case where a communication charge calculated from said transmitted/received packet number or communication time is equal to or less than said upper limit of said communication charge, yet a communication rate calculated from said transmitted/received packet number is equal to or less than said target minimum of said communication rate, and yet a line having a transmission rate suppressed exists, removing a suppress of the transmission rate of said line having the transmission rate suppressed.

The eighteenth invention for solving the above-mentioned problem is characterized in that, in one of the above-mentioned eleventh to seventeenth inventions,
said communication apparatus is mounted onto a mobile machine that moves; and
the entire administration policy of said communication apparatus differs responding to a vehicle occupancy ratio of said mobile machine.

The nineteenth invention for solving the above-mentioned problem is characterized in that, in one of the above-mentioned eleventh to eighteenth inventions,
said communication apparatus is mounted onto a mobile machine that moves; and
the entire administration policy of said communication apparatus differs responding to a position of said mobile machine.

The twentieth invention for solving the above-mentioned problem is characterized in that: a line selection method of a communication apparatus simultaneously connectable to a plurality of communication systems of an identical type and a different type including a communication system for which a charge increases with an amount of communication, characterized in comprising a line selection step of, based upon a communication line quality, a line-by-line administration policy of said communication system, and statistics information measured in the communication apparatus, deciding a communication system to which a connection is made.

The twenty-first invention for solving the above-mentioned problem is characterized in that: a computer-readable program, said computer controlling an operation of a communication apparatus simultaneously connectable to a plurality of communication systems of an identical type and a different type including a communication system for which a charge increases with an amount of communication, characterized in comprising a line selection step of, based upon a line-by-line administration policy, being information for administering each communication system, communication line quality information, being quality information of a line of each communication system, and statistics information that becomes status information of a line of each communication system, selecting a line of each communication system so as to satisfy a target minimum of a communication rate or an upper limit of a communication charge, said target minimum and upper limit obtained by integrating a plurality of communication systems.

The present invention pre-stores for example, the target upper limit of the communication charge per hour, or the target communication rate that the service provider desires in an entire administration policy 310 in the communication apparatus simultaneously connectable to a plurality of the radio systems of an identical type and a different type. Further, the present invention provides a line-by-line administration policy 320 having information stored for each line classification such as the utilization priority degree, the communication rate, a charging system, a charging rate, and the maximum line number.

On the other hand, information such as an actual use status of the line, the transmitted/received packet number per hour, and a line use rate is recorded as statistics information 400 for each line. Further, the communication quality of the use line is recorded as line quality information 500.

The communication apparatus judges the current communication status based upon the collected statistics information 400, and selects and connects the line or disconnects the line, and adjusts the use rate of the line while the utilization priority degree of the line classification and the communication expense accompanied by use of each line is taken into consideration, at the moment of the situation of being contrary to the information of the entire administration policy 310, for example, in the case that the communication amount money per hour has exceeded the target upper limit of the communication charge per hour, in the case that the target communication rate has not been reached, or the like.

### [EFFECTS OF THE INVENTION]

The present invention enables an increase in the communication charge to be prevented while the target communication rate or more is maintained. The reason is that in a case where the communication rate has exceeded the target communication rate, the line of which the utilization priority degree is low is selected and disconnected from among the lines that are currently in connection, or the use rate of the line is adjusted while the target communication rate or more is maintained.

Further, in accordance with the present invention, the communication charge does not exceed the target upper limit of the communication charge predetermined by the service provider. The reason is that the target upper limit of the communication charge per hour is calculated from the target upper limit of the communication charge, and if the actual communication charge per hour exceeds the target upper limit of the communication charge per hour, the line is disconnected in a case of the line for which the charge increases with the time, and the transmission rate is suppressed in a case of the line for which the charge increases with the amount of packets.

### [BRIEF DESCRIPTION OF THE DRAWINGS]

[Fig. 1] Fig. 1 is a network configuration view for explaining an embodiment of the present invention.
[Fig. 2] Fig. 2 is a configuration view of an MR for explaining the embodiment of the present invention.
[Fig. 3] Fig. 3 is a policy information table for explaining an example of the present invention.
[Fig. 4] Fig. 4 is a statistics information table for explaining the example of the present invention.
[Fig. 5] Fig. 5 is a quality information table for explaining the example of the present invention.
[Fig. 6] Fig. 6 is a configuration view of an HA for explaining the embodiment of the present invention.
[Fig. 7] Fig. 7 is an operational flowchart of a line selection process for explaining a first example of the present invention.
[Fig. 8] Fig. 8 is a graph of the communication rate as against a time base for explaining the example 1 of the present invention.
[Fig. 9] Fig. 9 is a graph of the communication rate as against a time base for explaining an example 2 of the present invention.
[Fig. 10] Fig. 10 is a policy information table for explaining the example 2 of the present invention.
[Fig. 11] Fig. 11 is a graph of a communication cost per hour as against a time base for explaining an example 3 of the present invention.
[Fig. 12] Fig. 12 is a graph of the communication cost per hour as against a time base for explaining an example 4 of the present invention.
[Fig. 13] Fig. 13 is a policy information table for explaining the example 4 of the present invention.
[Fig. 14] Fig. 14 is a graph of a total of the communication costs as against a time base for explaining an example 5 of the present invention.
[Fig. 15] Fig. 15 is a policy information table for explaining the example 5 of the present invention.
[Fig. 16] Fig. 16 is a graph of a total of the communication costs as against a time base for explaining an example 6 of the present invention.
[Fig. 17] Fig. 17 is a policy information table for explaining the example 6 of the present invention.

### [DESCRIPTION OF NUMERALS]

- 10:: Internet
- 20:: home agent
- 30:: PDC network
- 31:: UMTS network
- 32:: cdma2000 1x/EV-DO network
- 40:: mobile router
- 50 to 52:: access points
- 0 to 62:: mobile network nodes
- 70 to 77:: modems
- 80:: Ethernet (Registered Trademark) IF
- 90 to 92:: Ethernet (Registered Trademark) cables
- 100:: mobile network
- 110:: private line network
- 200:: policy information management part
- 210:: line selection part
- 220:: statistics information acquiring part
- 230:: IP/L4 processing part
- 240:: line management part
- 300, 301, and 302:: policy information
- 310, 311, and 312:: entire administration policy information
- 320, 321, and 322:: line-by-line administration policy information
- 400:: statistics information
- 500:: line quality information
- 600 and 650:: an actual value of a communication rate per hour
- 610 and 660:: a target minimum of the communication rate per hour
- 700 and 750:: an actual value of a communication cost per hour
- 710 and 760:: a target upper limit of the communication cost per hour
- 800 and 850:: an actual value of a total of the communication costs
- 810 and 860:: a target upper limit of a total of the communication costs
- 900 and 910:: network interfaces
- 920:: transfer processing part
- 930:: line controlling part
- 940:: scheduler

### [BEST MODE FOR CARRYING OUT THE INVENTION]

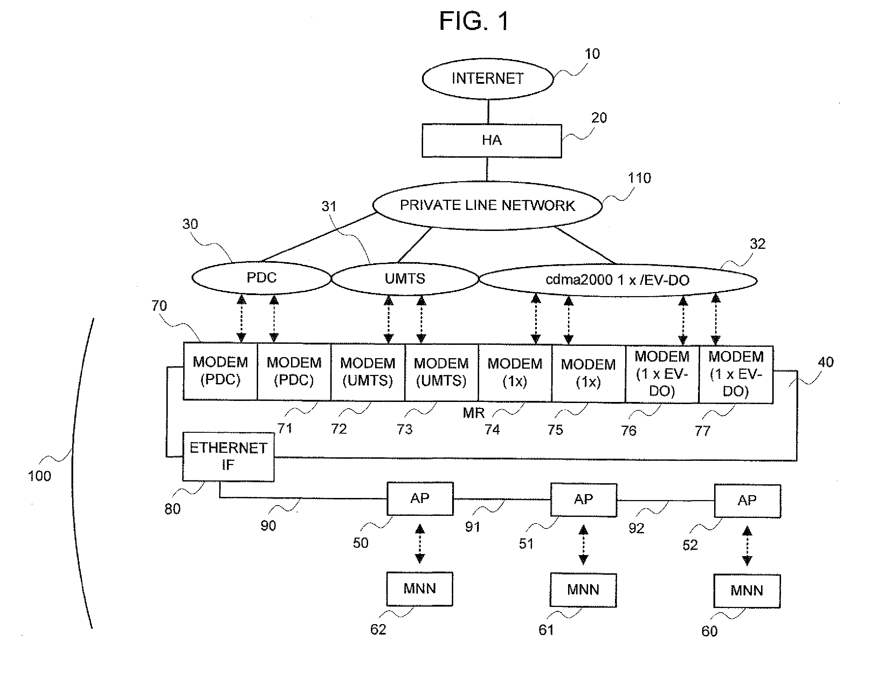

The radio communication system relating to the embodiment of the present invention will be explained by employing a network configuration view shown in Fig. 1.

A home agent 20 (hereinafter, referred to as an HA) connected to an Internet network 10 is connected to a mobile router 40 (hereinafter, referred to as an MR) via a PDC network 30, a UMTS network 31, a cdma2000 network 32 and a private line network 110. This MR 40 has modems 70 to 77 (modems 70 and 71 for a PDC, modems 72 and 73 for a UMTS, modems 74 and 75 for a cdma2000 1x, and modems 76 and 77 for a cdma2000 1x EV-DO) built-in, and further has an Ethernet (Registered Trademark) IF 80 as well built-in for connecting to mobile network nodes 60 to 62 (hereinafter, referred to as an MNN), being a user terminal, respectively. This Ethernet (Registered Trademark) IF 80 is connected to multistage-connected radio LAN access points 50 to 52 (hereinafter, referred to as an AP) in accordance with the IEEE 802.11 via Ethernet (Registered Trademark) cables 90 to 92.

The MR 40 notifies a classification of an available radio line group to the HA 20 at any time, thereby to regard a plurality of radio lines between the HA and the MR as one wide-bandwidth logical line, and makes an allocation as to which radio line group is used for transmitting the packet, which has a transmission destination to each other.

In such a manner, the MNNs 60 to 62 within a mobile network 100 including the MR 40 can access the Internet via the radio LAN APs 50 to 52.

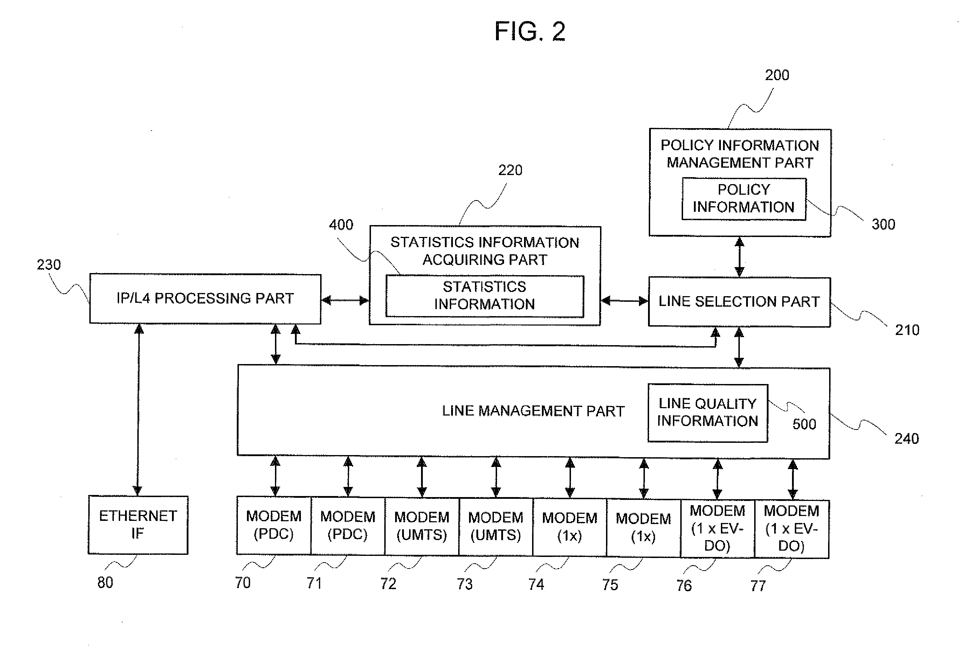

Next, a configuration of the MR 40 relating to the embodiment of the present invention will be explained by making a reference to Fig. 2.

The MR 40 has, for example, a configuration as shown in Fig. 2. Specifically explaining, the MR 40, which has the modems 70 to 77 and the Ethernet (Registered Trademark) IF 80, is configured of a policy information management part 200, a line selection part 210, a statistics information acquiring part 220, an IP/L4 processing part 230, and a line management part 240. Hereinafter, the details of the basic process in each of these processing parts will be explained.

Upon receiving an instruction from the line selection part 210, the line management part 240 takes an up/down control of a PPP link of a plurality of the modems 70 to 77, retains line quality information 500 periodically acquired from the modems 70 to 77, and notifies information pre-specified by the line selection part 210 out of it to the line selection part 210 at a specified cycle time. Additionally, the so-called line quality information 500, which is information associated with the communication quality of each line, is, for example, information as to whether the corresponding line is within a range or beyond a range, and information of a reception quality.

The IP/L4 processing part 230 performs an IP process and an L4 process of the packets received from the Ethernet (Registered Trademark) IF 80 and the modems 70 to 77 and the packet that are transmitted. Further, the IP/L4 processing part 230 transfers the packets addressed to the HA 20 and the MNNs 60 to 62, collects statistics information of the transferred packets, and notifies it to the statistics information acquiring part 220 at a cycle time specified by the statistics information acquiring part 220. In addition hereto, in transmitting/transferring the packet to an address of the HA 20, the IP/L4 processing part 230 makes a scheduling as to which modem out of the modems 70 to 77 each packet is transmitted from, and at this time, it makes a scheduling by taking into consideration the line use rate notified via the line management part 240 from the line selection part 210.

The statistics information acquiring part 220 collects statistics information including the transmitted/received packet number per hour and the byte number from the IP/L4 processing part 230, retains it as the statistics information 400, and notifies the specified statistics information out of it to the line selection part 210 at a cycle time pre-specified by the line selection part 210.

The line selection part 210 acquires policy information 300 that the policy information management part 200 retains, the statistics information 400 that the statistics information acquiring part 220 retains, and line quality information 500 that the line management part 240 retains, determines the line classification that should be utilized or decides the use ratio of each line, based upon these kinds of information, and notifies it to the line management part 240. Further, in a case of changing the use ratio of the down line, the line selection part 210 transmits a signal ring including the line classification and its use ratio to the HA 20 via the IP/L4 processing part 230.

Herein, the policy information 300 will be explained.

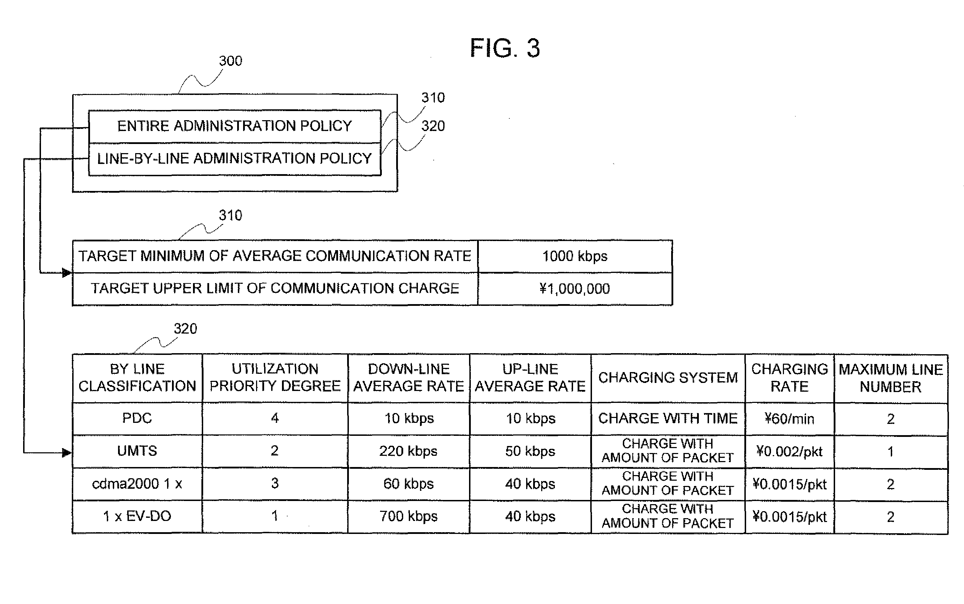

The policy information 300 that the MR 40 retains is configured, for example, as shown in Fig. 3, of an entire administration policy information 310 and a line-by-line administration policy information 320.

The entire administration policy information 310 is configured of a target minimum of an average communication rate and a target upper limit of the communication charge of the mobile network 100 that the MR 40 handles.

The line-by-line administration policy information 320 is configured of, for each line classification, a utilization priority degree of its line, a communication rate that is expected (a down-line average rate and an up-line average rate), the charging system, the charging rate, and the maximum line number.

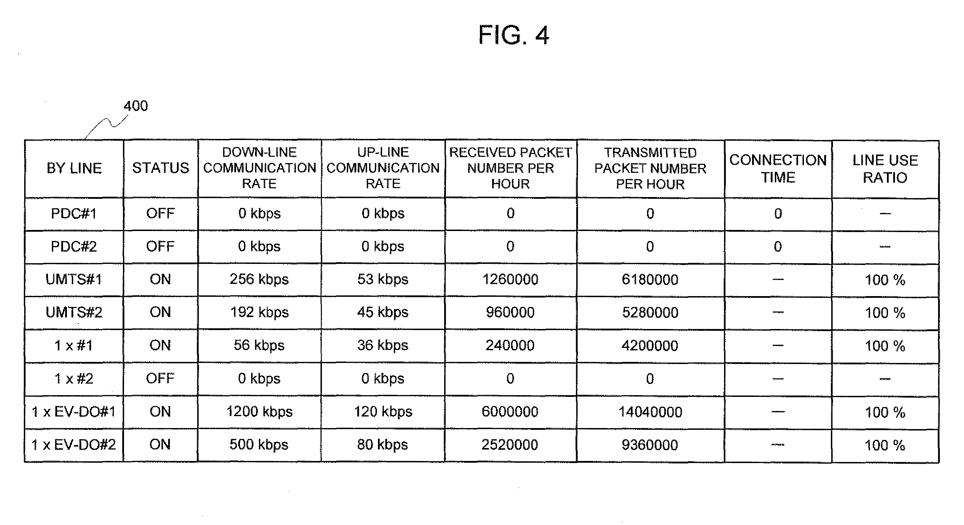

Further, the statistics information 400 that the MR 40 retains is configured, for example, as shown in Fig. 4, of, for each line, a status of its line (being in use (on) or not in use (off)), the down-line communication rate, the up-line communication rate, the received packet number per hour, the transmitted packet number per hour, a connection time, and the line use ratio. Additionally, with the statistics information 400 shown in Fig. 4, information is recorded not for each line classification but for each line, and, for example, with the line-by-line administration policy information 320 shown in Fig. 3, the number of the PDC (line classification) is two, whereby information is recorded respectively by dividing the PDC into two lines of PDC#1 and PDC#2 in the statistics information 400 shown in Fig. 4.

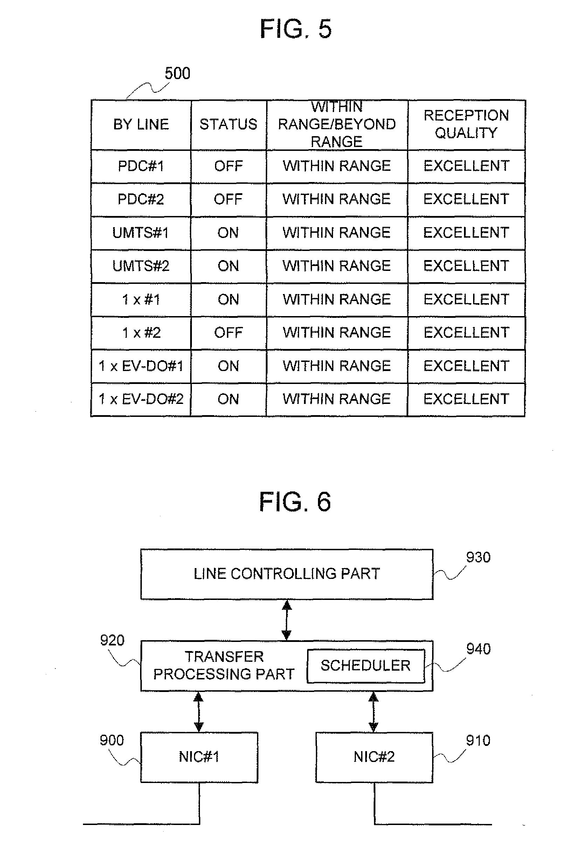

In addition hereto, the line quality information 500 that the MR 40 retains is configured, for example, as shown in Fig. 5, of a status for each line, a determination as to whether its line exists within the range or beyond the range, and the reception quality. Additionally, with the line quality information 500 as well shown in Fig. 5, similarly to the statistics information 400 shown in Fig. 4, information is recorded not for each line classification but for each line, and, for example, with the line-by-line administration policy information 320 shown in Fig. 4, the number of the PDC (line classification) is two, whereby information is recorded respectively by dividing the PDC into two lines of PDC#1 and PDC#2 in the line quality information 500 shown in Fig. 5.

Continuously, a configuration of the HA 20 of the embodiment relating to the present invention will be explained.

The HA 20 has, for example, a configuration shown in Fig. 6. Specifically explaining, the HA 20 is configured of a network interface 900 connected to the private line network 110, a network interface 910 connected to the Internet 10, a transfer processing part 920, and a line controlling part 930, and the transfer processing part 920 includes a scheduler 940 inside it. The line controlling part 930 notifies the use rate of the line notified by the MR 40 to the transfer processing part 920.

The scheduler 940 decides which modem out of the modems 70 to 77 of the MR 40 the packet received from the network interface 910 is transmitted to an address of, responding to a congestion status of the line and the use ration of the line, and after the packet for which the modem that becomes a destination has been decided is capsulated with an appropriate outside header in the transfer processing part 920, it is transmitted to the MR 40 via the network interface 900.

Further, the transfer processing part 920 decapsulates the packet received from the network interface 900, and transfers it to the Internet 10 via the network interface 910.

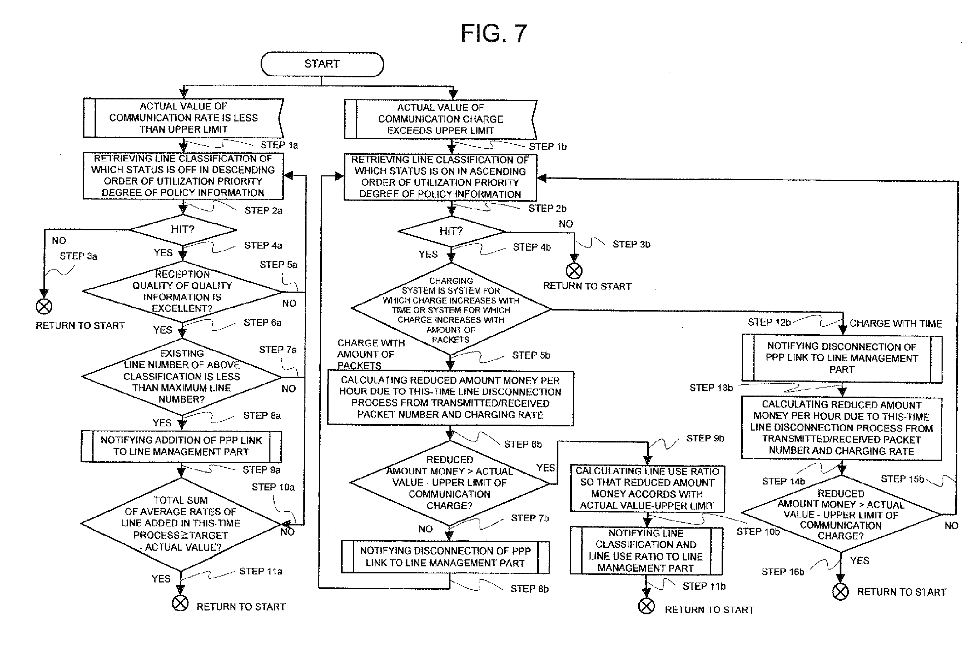

Next, an operational flow of the line selection part 210 relating to the embodiment of the present invention will be explained in details by making a reference to Fig. 7. Fig. 7 is a flowchart of the operation of the line selection part 210.

At first, in a case where the actual value of the communication rate has fallen below the target, thereby allowing the process to be initiated (step 1a), the line selection part 210 retrieves the line of which the status of the line quality information 500 is off, i.e. the line that is not in use in the descending order of the utilization priority degree of the line classification of the policy information (step 2a). In a case where no corresponding line exists, the line selection part 210 finishes the line selection process (step 3a). In a case where the corresponding line exists, it is checked whether the reception quality of the line quality information 500 of the corresponding line is excellent (step 4a).

In a case where the reception quality is not excellent, the line selection part 210 returns to the above-mentioned line retrieval of the classification (step 5a). In a case where the reception quality is excellent, it is checked whether the current use line number of the corresponding classification is less than the predetermined maximum line number (step 6a). In a case where it becomes equal to or more than the maximum line number, the line selection part 210 returns to the above-mentioned retrieval of the line classification (step 7a). In a case where it is less than the maximum line number, the line selection part 210 notifies the line management part that the PPP link should be established in the corresponding line (step 8a).

Continuously, the total sum of the average rates of the line added in the line selection process is compared with a difference between the target and the actual value of the communication rate (step 9a). In a case where the total sum of the average rates is smaller than the foregoing difference, the line selection part 210 returns to the above-mentioned retrieval of the line classification (step 10a). In a case where the total sum of the average rates is equal or more than the foregoing difference, the line selection part 210 finishes the line selection process.

As a result of having retrieved all line classifications, in a case where no corresponding line exists, the line selection part 210 finishes the line selection process.

Next, the case that the actual value of the communication charge has exceeded the predetermined target upper limit, thereby allowing the process to be initiated will be explained.

In a case where the actual value of the communication charge has exceeded the predetermined target upper limit, thereby allowing the process to be initiated (step 1b), the line selection part 210 retrieves the line of which the status of the line quality information 500 is on in the ascending order of the utilization priority degree of the line classification of the policy information (step 2b), and in a case where no corresponding line exists, the line selection part 210 finishes the line selection process (step 3b).

In a case where the line classification of the line of which the status is on exists, its charging system is determined (step 4b). In a case where the charging system is a system for the charge increases with the amount of the packets (step 5b), the reduced amount money per hour due to the line disconnection in this-time line selection process is calculated from the transmitted/received packet number and the charging rate (step 6b).

The foregoing reduced amount money is compared with a difference of the amount money between the actual value and the target upper limit of the communication charge, and in a case where the reduced amount money is equal to or less than a difference of the amount money (step 7b), the line selection part 210 requests the line management part 240 to disconnect the PPP link, and returns to the foregoing retrieval of the line classification (step 8b). In a case where the foregoing reduced amount money is larger than a difference of the amount money (step 9b), the line selection part 210 calculates the line use rate so that the reduced amount money accords with a difference of the amount money between the actual value and the target upper limit (step 10b), and notifies the line classification and the use rate of the line to the line management part 240.

Further, In a case where the charging system of the line classification of the line of which the status is on is a system for which the charge increases with the time (step 12b), the line selection part 210 requests the line management part 240 to disconnect the PPP link of the corresponding line (step 13b), and calculates the reduced amount money per hour due to this-time line disconnection process from the connection time and the charging rate (step 14b). This reduced amount money is compared with a difference of the amount money between the actual value and the target upper limit of the communication charge, and in a case where the reduced amount money is equal to or less than a difference of the amount money, the line selection part 210 returns to the foregoing retrieval of the line classification (step 15b), and in a case where the reduced amount money is larger than a difference of the amount money, the line selection part 210 finishes the line selection process (step 16b).

Additionally, as the method of selecting the line by the identical line classification, the method is thinkable of selecting the line in an order of pre-allocated identifiers; however the method of selecting the line at random may be acceptable.
Further, as the method of selecting the line by the identical line classification in disconnecting the line, for example, the method is acceptable of preferentially selecting and disconnecting the line of which the reception quality is bad.

### [Example 1]

Next, an example 1 showing a specific operation of the foregoing embodiment will be explained.

Additionally, in the following explanation of the example 1, the entire administration policy information 310, the line-by-line administration policy information 320, the statistics information 400, and the line quality information 500 will be explained by employing ones shown in Fig. 3, Fig. 4 and Fig. 5. Further, a specific operational flow will be explained by making a reference to the operational flowchart of Fig. 7.

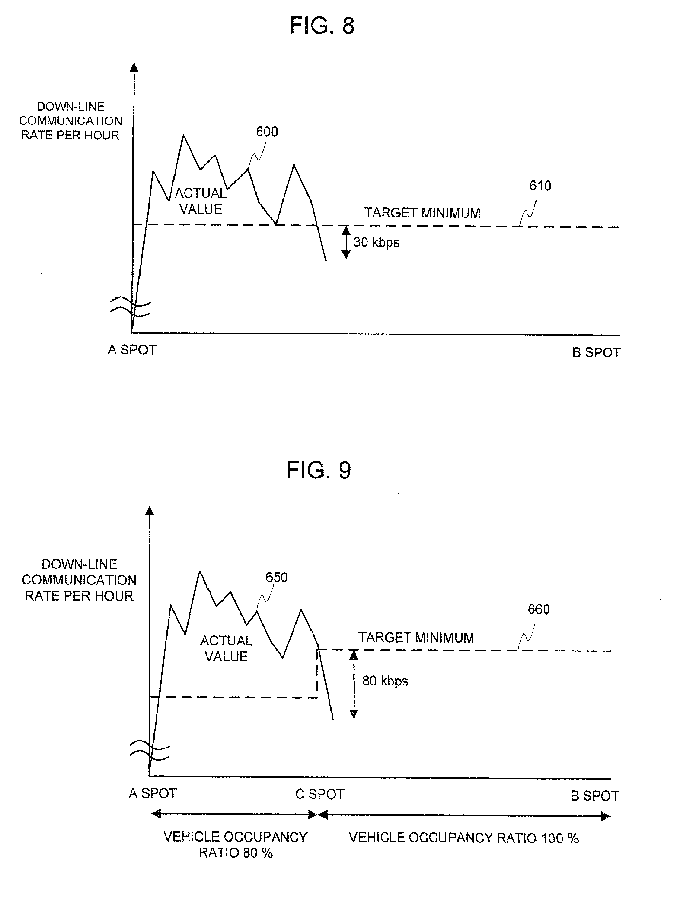

Fig. 8 is a graph having an actual value 600 of the communication rate per hour and a target minimum 610 plotted in the case that the mobile network 100 moves from an A spot to a B spot.

As shown in the identical figure, the line selection part 210 starts the line selection process, which originates in that the actual value 600 of the communication rate has fallen below the target minimum 610.

The line selection part 210 retrieves the line of which the status of the line quality information 500 is off, i.e. the line that is not in use in the descending order of the utilization priority degree of the line classification of the line-by-line administration policy information 320 because the down-line communication rate that should be made up is 30 kbps (step 2a). Herein, the line selection part 210 selects the line of 1x#2 of the cdma2000 1x because the utilization priority degree of the cdma2000 1x is "3", and one line that is not in use exists in this classification.

Next, it is checked whether the reception quality of the selected line of 1x#2 of the cdma2000 1x is excellent (step 4a). The corresponding line is "excellent" according to the line quality information 500.

In a case where the reception quality is excellent, it is checked whether the use line number of the corresponding classification is equal to or less than the predetermined maximum line number (step 6a). Herein, even though the line of 1x#2 of the cdma2000 1x is selected, the use line number is equal to or less than the maximum line number because the maximum line number of the cdma2000 1x is "2" according to the line-by-line administration policy information 320.

Thereupon, the line selection part 210 notifies the line management part that the PPP link should be established in 1x#2 of the cdma2000 1x (step 8a).

Continuously, the total sum of the average rates of the line added in this-time line selection process is compared with a difference between the target minimum and the actual value of the communication rate (step 9a). It is one line of 1x#2 of the cdma2000 1x that has been added in this-time line selection process, and its down-line average rate is 60 kbps. On the other hand, a difference between the target minimum and the actual value of the communication rate is 30 kbps. Therefore, the total sum of the down-line average rates is equal to more than the foregoing difference, so the line selection part 210 finishes the line selection process.

### [Example 2]

An example 2 showing a specific operation of the foregoing embodiment will be explained.

The target minimum of the down-line communication rate was assumed to be identical between the A spot and the B spot in the foregoing example 1, whereas, in this example 2, the example is explained of weighting and distributing the target minimum of the communication rate responding to a vehicle occupancy ratio.

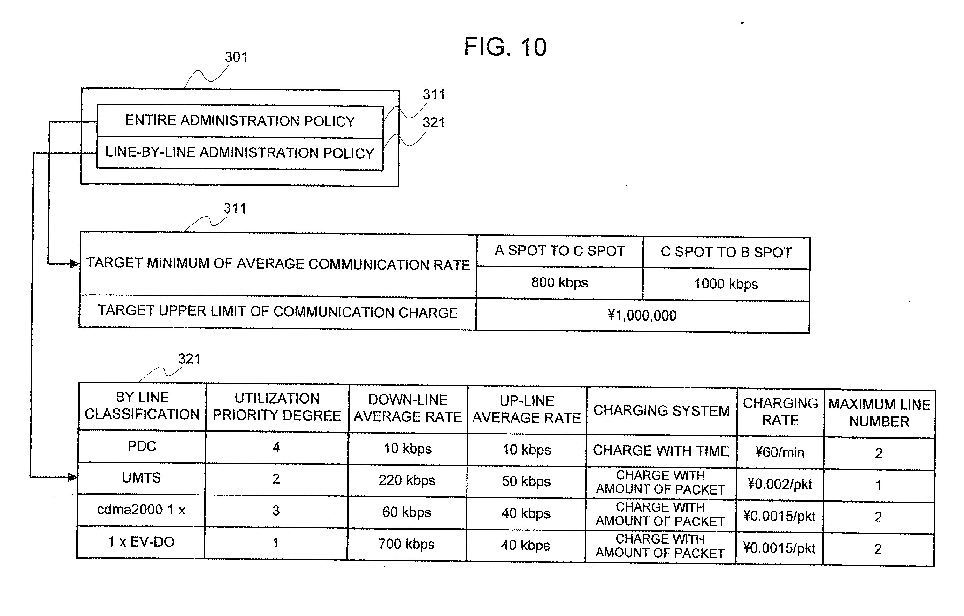

Additionally, in the following explanation of the example 2, the explanation will be made, by employing the entire administration policy information 310 that is shown in Fig. 10, and the statistics information 400 and the line quality information 500 shown in Fig. 4 and Fig. 5 respectively. Further, a specific operational flow will be explained by making a reference to the operational flowchart of Fig. 7.

Fig. 9 is a graph having an actual value 650 and a target minimum 660 of the communication rate per hour plotted in the case that the mobile network 100 moves from the A spot to the B spot. Fig. 10 shows policy information 301 in the example 2, and the average-rate target minimum 660 is weighted and distributed as shown in entire administration policy information 311 of Fig. 10 by taking into consideration the fact that the vehicle occupancy ratio between the A spot and a C spot is 80%, and the vehicle occupancy ratio between the C spot and a B spot is 100%.

Additionally, with a switchover of the entire administration policy, a configuration may be made so that the vehicle occupancy ratio is pre-acquired from a reservation situation etc. of a train having the mobile network 100 installed, and is pre-recorded in the entire administration policy information 310, and the entire administration policy is switched over at a timing (in this example, at the C spot) at which the vehicle occupancy ratio is changed. Further, a configuration may be made so that the communication rate that corresponds to the vehicle occupancy ratio is pre-decided, and is pre-described in the entire administration policy information 310, the vehicle occupancy ratio is updated on a real time basis, and the entire administration policy is administered at the communication rate responding to its vehicle occupancy ratio.

Next, a specific operation will be explained.

At first, at the moment that the mobile network 100 has crossed the C spot, the line selection part 210 starts the line selection process, which originates in that the actual value 650 has fallen below the target minimum 660. The line selection part 210 retrieves the line of which the status of the line quality information 500 is off, i.e. the line that is not in use in the descending order of the utilization priority degree of the line classification of the line-by-line administration policy information 320 (step 2a). Herein, the line selection part 210 selects the line of 1x#2 of the cdma2000 1x because the utilization priority degree of cdma2000 1x is "3", and one line that is not in use exists in this classification.

Next, it is checked whether the reception quality of the selected line of 1x#2 of the cdma2000 1x is excellent (step 4a). The corresponding line is "excellent" according to the line quality information 500.

In a case where the reception quality is excellent, it is checked whether the use line number of the corresponding classification is equal to or less than the predetermined maximum line number (step 6a). Herein, even though the line of 1x#2 of the cdma2000 1x is selected, the use line number is equal to or less than the maximum line number because the maximum line number of the cdma2000 1x is "2" according to the line-by-line administration policy information 320.

Thereupon, the line selection part 210 notifies the line management part that the PPP link should be established in 1x#2 of the cdma2000 1x (step 8a).

Continuously, the total sum of the average rates of the line added in the this-time line selection process is compared with a difference between the target minimum and the actual value of the communication rate (step 9a). It is one line of 1x#2 of the cdma2000 1x that has been added in this-time line selection process, and its down-line average rate is 60 kbps. On the other hand, a difference between the target minimum and the actual value of communication rate is 80 kbps. Therefore, the line selection part 210 returns to the above-mentioned retrieval of the line classification (step 10a) because the total sum of the down-line average rate is smaller than the foregoing difference.

Again, the line selection part 210 retrieves the line of which the status of the line quality information 500 is off, i.e. the line that is not in use in the descending order of the utilization priority degree of the line classification of the line-by-line administration policy information 320 (step 2a). Herein, the line selection part 210 selects the line of PDC#1 of the PDC because the utilization priority degree of the PDC is "4", and two lines that are not in use exist in this classification.

Next, it is checked whether the reception quality of the selected line of PDC#1 of the PDC is excellent (step 4a). The corresponding line is "excellent" according to the line quality information 500.

In a case where the reception quality is excellent, it is checked whether the use line number of the corresponding classification is less than the predetermined maximum line number (step 6a). Herein, even though the line of PDC#1 of the PDC is selected, the use line number is less than the maximum line number because the maximum line number of the PDC is "2" according to the line-by-line administration policy information 320.

Thereupon, the line selection part 210 notifies the line management part that the PPP link should be established in PDC#1 of the PDC (step 8a).

Continuously, the total sum of the average rates of the line added in this-time line selection process is compared with a difference between the target minimum and the actual value of the communication rate (step 9a). The down-line average rate of PDC#1 of the PDC added in this-time line selection process is 10 kbps, and the down-line average rate of 1x#2 of the cdma2000 1x added last time is 60 kbps, so the total sum of the average rates is 70 kbps.

On the other hand, a difference between the target minimum and the actual value of the communication rate is 80 kbps. Therefore, the line selection part 210 returns to the above-mentioned retrieval of the line classification (step 10a) because the total sum of the down-line average rates is smaller than the foregoing difference.

Again, the line selection part 210 retrieves the line of which the status of the line quality information 500 is off, i.e. the line that is not in use in the descending order of the utilization priority degree of the line classification of the line-by-line administration policy information 320 (step 2a). Herein, the line selection part 210 selects the line of PDC#2 of the PDC because the utilization priority degree of the PDC is "4", and one line that is not in use exists in this classification.

Next, it is checked whether the reception quality of the selected line of PDC#2 of the PDC is excellent (step 4a). The corresponding line is "excellent" according to the line quality information 500.

In a case where the reception quality is excellent, it is checked whether the use line number of the corresponding classification is equal to or less than the predetermined maximum line number (step 6a). Herein, even though the line of PDC#2 of the PDC is selected, the use line number is equal to or less than the maximum line number because the maximum line number of the PDC is "2" according to the line-by-line administration policy information 320.

Thereupon, the line selection part 210 notifies the line management part that the PPP link should be established in PDC#2 of the PDC (step 8a).

Continuously, the total sum of the average rates of the line added in this-time line selection process is compared with a difference between the target minimum and the actual value of the communication rate (step 9a). The down-line average rate of PDC#2 of the PDC added in this-time line selection process is 10 kbps, and the total sum of the down-line average rates of 1x#2 of the cdma2000 1x and PDC#1 of the PDC added until now is 70 kbps, so the total sum of the average rates due to this-time addition becomes 80 kbps. On the other hand, a difference between the target minimum and the actual value of the communication rate is 80 kbps. Therefore, the line selection part 210 finishes the line selection process because the total sum of the down-line average rates is equal to or mores than the foregoing difference.

### [Example 3]

An example 3 showing a specific operation of the foregoing embodiment will be explained.

A fluctuation in the down-line communication rate was a trigger for starting the line selection process in the foregoing example 1 and example 2, whereas it is assumed in this example that a fluctuation in the communication cost is a trigger for starting the line selection process.

Additionally, in the following explanation of the example 3, the explanation will be made, by employing the entire administration policy information 310 that is shown in Fig. 3, the statistics information 400 shown in Fig. 4, and the line quality information 500 shown in Fig. 5. Further, a specific operational flow will be explained by making a reference to the operational flowchart of Fig. 7.

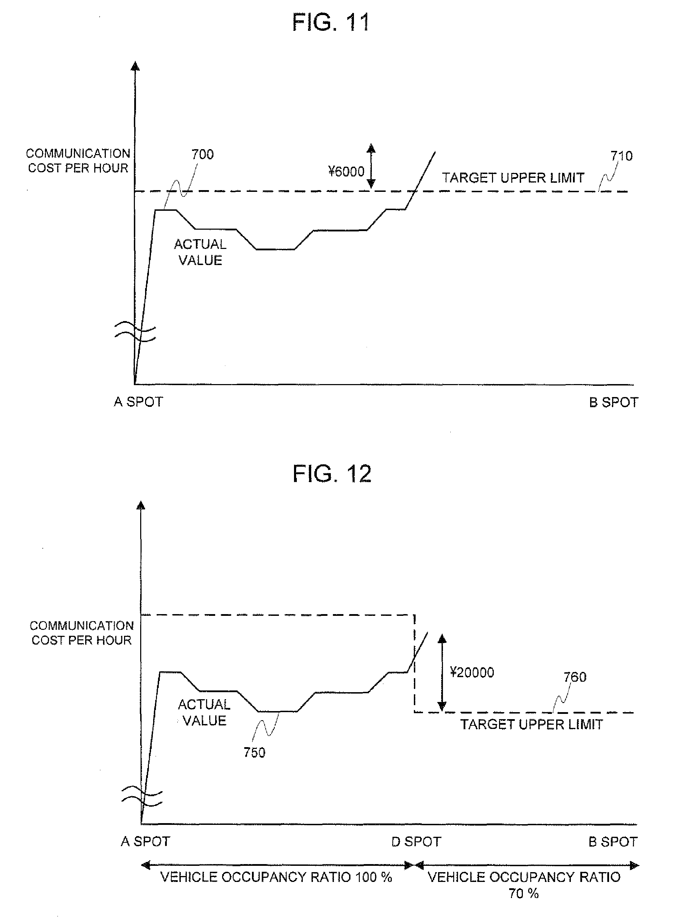

Fig. 11 is graph having an actual value 700 and a target upper limit 710 of the communication cost per hour plotted in the case that the mobile network 100 moves from the A spot to the B spot.

As shown in the identical figure, the line selection part 210 starts the line selection process, which originates in that the actual value 700 of the communication cost has exceeded the target upper limit 710.

The line selection part 210 retrieves the line of which the status of the line quality information 500 is on in the ascending order of the utilization priority degree of the line classification of the policy information (step 2b). Herein, the line selection part 210 selects the line of 1x#1 of the cdma2000 1x because the utilization priority degree of cdma2000 1x is "3", and 1x#1 of its cdma2000 1x is in use.

Next, the line classification of the line of which the status is on exists, whereby the charging system thereof is determined (step 4b). The reduced amount money per hour due to the line disconnection in this-time line selection process is calculated from the transmitted/received packet number and the charging rate (step 6b) because the line of 1x#1 of the cdma2000 1x is a line for which the charge increases with the amount of the packets (step 5b). Herein, the reduced amount money per hour is 6660 yen (0.0015¥/packet x (4200000+240000) packet) per hour.

Next, the foregoing reduced amount money is compared with a difference of the amount money between the actual value and the target upper limit of the communication charge. Herein, the reduced amount money is 6660 yen (0.0015¥/packet x (4200000+240000) packet), and a difference of the amount money between the actual value and the target upper limit of the communication charge is 6000 yen, whereby the foregoing reduced amount money is larger than a difference of the amount money. Therefore, the line selection part 210 calculates the line use rate so that the reduced amount money accords with a difference of the amount money between the actual value and the upper limit (step 10b), and notifies the line classification and the use rate of the line to the line management part 240.

Herein, it is assumed that the line use ratio of 1x#1 of the cdma2000 1x is 100-((6000/6660)x100)≒10%.

### [Example 4]

An example 4 showing a specific operation of the foregoing embodiment will be explained.

The target upper limit of the communication cost was assumed to be identical from the A spot to the B spot in the foregoing example 3, whereas the target upper limit of the communication cost is weighed and distributed responding to the vehicle occupancy ratio in this example.

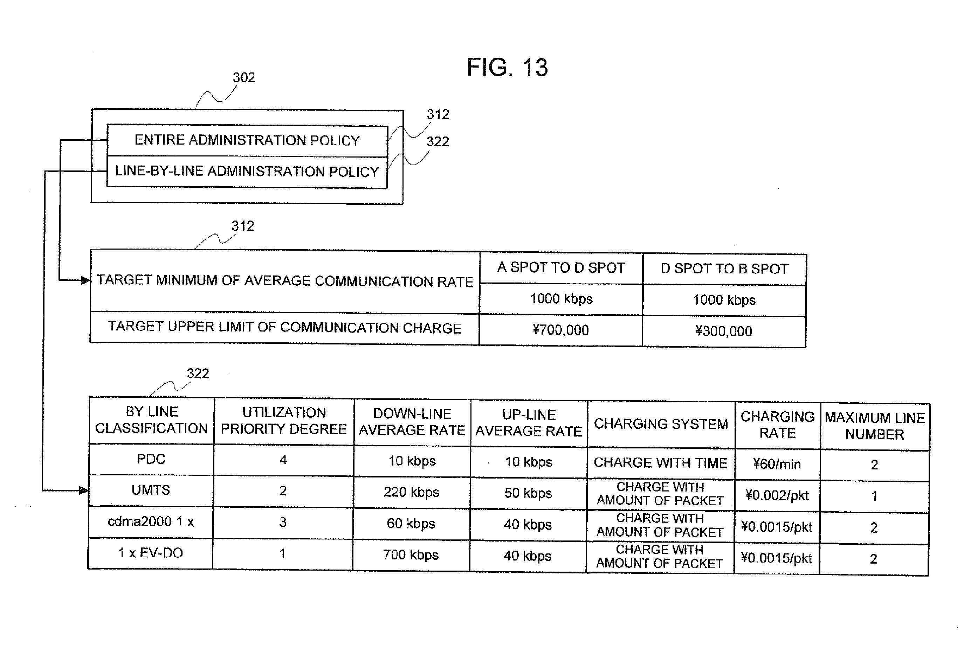

Additionally, in the following explanation of the example 4, the explanation will be made, by employing the entire administration policy information 310 that is shown in Fig. 13, the statistics information 400 shown in Fig. 4, and the line quality information 500 shown in Fig. 5. Further, a specific operational flow will be explained by making a reference to the operational flowchart of Fig. 7.

Fig. 12 is a graph having an actual value 750 and a target upper limit 760 of the communication cost per hour plotted in the case that the mobile network 100 moves from the A spot to the B spot. In this example, the communication cost per hour is weighted and distributed, by taking into consideration the fact that the vehicle occupancy ratio between the A spot and the D spot is 100%, and the vehicle occupancy ratio between the D spot and the B spot is 70%.

Additionally, with a switchover of the entire administration policy, a configuration may be made so that the vehicle occupancy ratio is pre-acquired from a reservation situation etc. of a train having the mobile network 100 installed, and is pre-recorded in the entire administration policy information 310, and the entire administration policy is switched over at a timing (in this example, at the D spot) at which the vehicle occupancy ratio is changed. Further, a configuration may be made so that the communication rate that corresponds to the vehicle occupancy ratio is pre-decided, and is predescribed in the entire administration policy information 310, the vehicle occupancy ratio is updated on a real time basis, and the entire administration policy is administered at the communication rate responding to its vehicle occupancy ratio.

Next, a specific operation will be explained.

At the moment that the mobile network 100 has crossed the D spot, the line selection part 210 starts the line selection process, which originates in that the actual value 750 has exceeded the target upper limit 760.

The line selection part 210 retrieves the line of which the status of the line quality information 500 is on in the ascending order of the utilization priority degree of the line classification of the policy information (step 2b). Herein, the line selection part 210 selects the line of 1x#1 of the cdma2000 1x because the utilization priority degree of cdma2000 1x is "3", and 1x#1 of its cdma2000 1x is in use.

Next, the line classification of the line of which the status is on exists, whereby the charging system thereof is determined (step 4b). The reduced amount money per hour due to the line disconnection in this-time line selection process is calculated from the transmitted/received packet number and the charging rate (step 6b) because the line of 1x#1 of the cdma2000 1x is a line for which the charge increases with the amount of the packets (step 5b). Herein, the reduced amount money per hour is 6660 yen (0.0015¥/packet x (4200000+240000) packet).

Next, the foregoing reduced amount money is compared with a difference of the amount money between the actual value and the target upper limit of the communication charge. Herein, the reduced amount money is 6660 yen (0.0015¥/packet x (4200000+240000) packet), and a difference of the amount money between the actual value and the target upper limit of the communication charge is 20000 yen, whereby the foregoing reduced amount money is smaller than a difference of the amount money. Therefore, the line selection part 210 requests the line management part 240 to disconnect the PPP link, and returns to the foregoing retrieval of the line classification (step 8b).

Continuously, the line selection part 210 retrieves the line of which the status of the line quality information 500 is on in the ascending order of the utilization priority degree of the line classification of the policy information (step 2b). Herein, the line selection part 210 selects the line of the UMTS#1 because, in succession to 1x#1 of the cdma2000 1x, the utilization priority degree of a UMTS is "2", and its UMTS#1 is in use.

Next, the line classification of the line of which the status is on exists, whereby the charging system thereof is determined (step 4b). The reduced amount money per hour due to the line disconnection in this-time line selection process is calculated from the transmitted/received packet number and the charging rate (step 6b), because the line of the UMTS#1 is a line for which the charge increases with the amount of the packets (step 5b). Herein, the reduced amount money per hour is 14880 yen per hour (0.002¥/packet x (6180000+1260000) packet).

Next, the total sum of the foregoing reduced amount money is compared with a difference of the amount money between the actual value and the target upper limit of the communication charge. Herein, the reduced amount money of 1x#1 of the cdma2000 1x is 6660 yen (0.0015¥/packet x (4200000+240000) packet), and the reduced amount money of the UMTS#1 is 14880 yen (0.002¥/packet x (6180000+1260000) packet), so the total sum of the reduced amount moneys per hour is 21540 yen. On the other hand, a difference of the amount money between the actual value and the target upper limit of the communication charge is 20000 yen, whereby the foregoing reduced amount money is larger than a difference of the amount money. Therefore, the line selection part 210 calculates the line use rate so that the reduced amount money accords with a difference of the amount money between the actual value and the target upper limit (step 10b), and notifies the line classification and the use rate of the line to the line management part 240.

Herein, it is assumed that the line use ratio of the UMTS#1 is 100-((20000-6660)/14880)x100)≒10%.

### [Example 5]

An example 5 showing a specific operation of the foregoing embodiment will be explained.

The communication cost per hour was employed as a comparison index in the foregoing example 3 and the example 4, whereas the total of the communication costs is employed as a comparison index in this example.

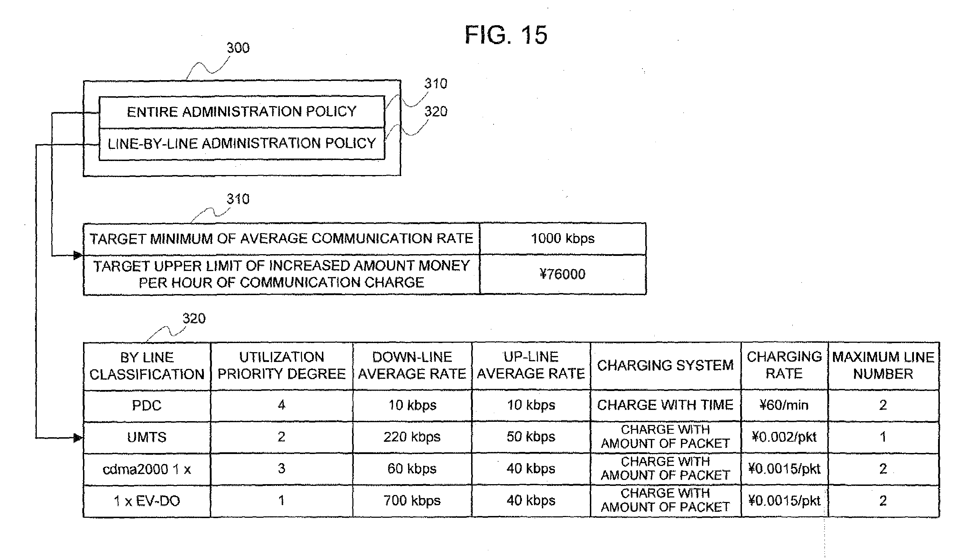

Additionally, in the following explanation of the example 5, the explanation will be made, by employing the entire administration policy information 310 that is shown in Fig. 15, the statistics information 400 shown in Fig. 4, and the line quality information 500 shown in Fig. 5. Further, a specific operational flow will be explained by making a reference to the operational flowchart of Fig. 7.

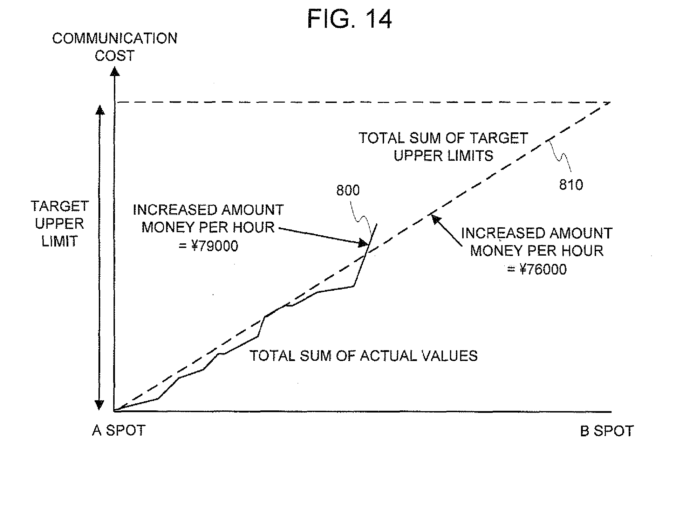

Fig. 14 is a graph having a total 800 of the actual values and a total 810 of the target upper limits of the communication costs plotted in a case where the mobile network 100 moves from the A spot to the B spot. The line selection part 210 starts the line selection process, which originates in that the total 800 of the actual values has exceeded the total 810 of the target upper limits.

The line selection part 210 retrieves the line of which the status of the line quality information 500 is on in the ascending order of the utilization priority degree of the line classification of the policy information (step 2b). Herein, the line selection part 210 selects the line of 1x#1 of the cdma2000 1x because the utilization priority degree of cdma2000 1x is "3", and 1x#1 of its cdma2000 1x is in use.

Next, the line classification of the line of which the status is on exists, whereby the charging system thereof is determined (step 4b). The reduced amount money per hour due to the line disconnection in this-time line selection process is calculated from the transmitted/received packet number and the charging rate (step 6b) because the line of 1x#1 of the cdma2000 1x is a line for which the charge increases with the amount of the packets (step 5b). Herein, the reduced amount money per hour is 6660 yen per hour (0.0015¥/packet x (4200000+240000) packet).

Next, the foregoing reduced amount money is compared with a difference of the amount money between the actual value and the target upper limit of the communication charge. Herein, the reduced amount money is 6660 yen (0.0015¥/packet x (4200000+240000) packet), and a difference of the amount money between the actual value of the increased amount money per hour of the communication charge and the target upper limit of the increased amount money per hour of the communication charge is 3000 yen, so the foregoing reduced amount money is larger than a difference of the amount money. Therefore, the line selection part 210 calculates the line use rate so that the reduced amount money accords with a difference of the amount money between the actual value and the upper limit (step 10b), and notifies the line classification and the use rate of the line to the line management part 240.

Herein, it is assumed that the line use ratio of 1x#1 of the cdma2000 1x is 100-(3000/6660 x 100) ≒54%.

### [Example 6]

An example 6 showing a specific operation of the foregoing embodiment will be explained.

The embodiment in which the total of the target upper limits had a constant increase ratio from the A spot to the B spot was applied in the foregoing example 5, whereas the embodiment in which an increased amount money of the communication cost per hour is changed responding to the vehicle occupancy ratio is applied in this example.

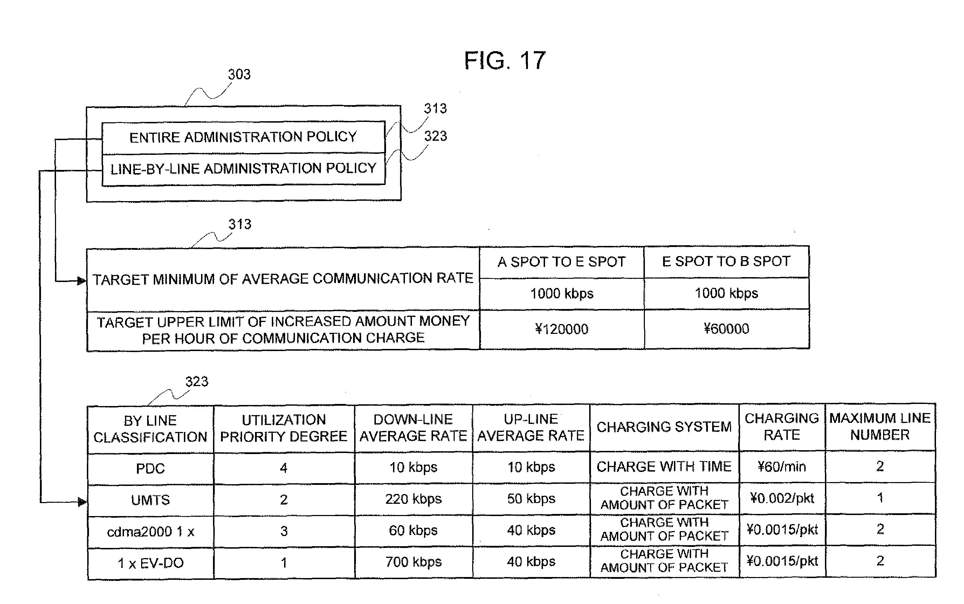

Additionally, in the following explanation of the example 6, the explanation will be made, by employing the entire administration policy information 310 that is shown in Fig. 17, the statistics information 400 shown in Fig. 4, and the line quality information 500 shown in Fig. 5. Further, a specific operational flow will be explained by making a reference to the operational flowchart of Fig. 7.

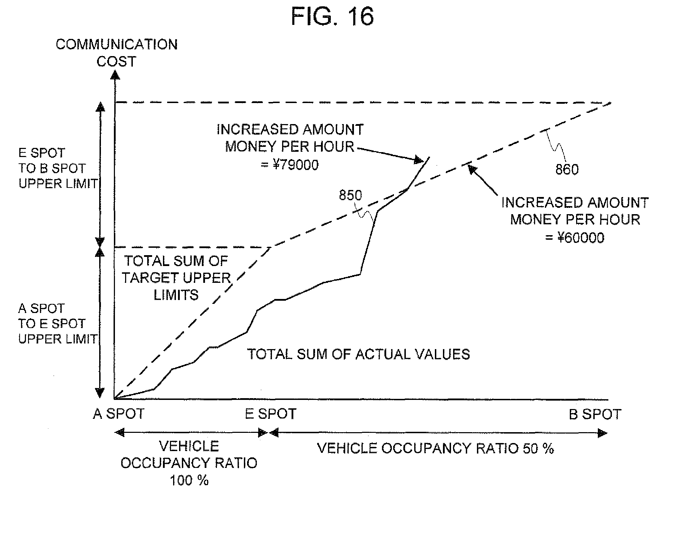

Fig. 16 is a graph having a total 850 of the actual values and a total 860 of the target upper limits of the communication costs plotted in a case where the mobile network 100 moves from the A spot to the B spot. In this example, a different increased amount money is applied to a range from the A spot to an E spot point and a range from the E spot to the B spot, respectively, by taking into consideration the fact that the vehicle occupancy ratio between the A spot and a E spot is 100%, and the vehicle occupancy ratio between the E spot and the B spot is 50%.

Additionally, with a switchover of the entire administration policy, a configuration may be made so that the vehicle occupancy ratio is pre-acquired from a reservation situation etc. of a train having the mobile network 100 installed, and is pre-recorded in the entire administration policy information 310, and the entire administration policy is switched over at a timing (in this example, at the E spot) at which the vehicle occupancy ratio is changed. Further, a configuration may be made so that the communication rate that corresponds to the vehicle occupancy ratio is pre-decided, and is predescribed in the entire administration policy information 310, the vehicle occupancy ratio is updated on a real time basis, and the entire administration policy is administered at the communication rate responding to its vehicle occupancy ratio.

Next, a specific operation will be explained.

The line selection part 210 starts the line selection process, which originates in that the total 850 of the actual values has exceeded the total 860 of the target upper limits.

The line selection part 210 retrieves the line of which the status of the line quality information 500 is on in the ascending order of the utilization priority degree of the line classification of the policy information (step 2b). Herein, the line selection part 210 selects the line of 1x#1 of the cdma2000 1x because the utilization priority degree of cdma2000 1x is "3", and 1x#1 of its cdma2000 1x is in use.

Next, the line classification of the line of which the status is on exists, whereby the charging system thereof is determined (step 4b). The reduced amount money per hour due to the line disconnection in this-time line selection process is calculated from the transmitted/received packet number and the charging rate (step 6b) because the line of 1x#1 of the cdma2000 1x is a line for which the charge increases with the amount of the packets (step 5b). Herein, the reduced amount money per hour is 6660 yen (0.0015¥/packet x (4200000+240000) packet) per hour.

Next, the foregoing reduced amount money is compared with a difference of the amount money between the actual value of the increased amount money per hour of the communication charge and the target upper limit of the increased amount money per hour of the communication charge. Herein, the reduced amount money is 6660 yen (0.0015¥/packet x (4200000+240000) packet), and a difference of the amount money between the actual value and the target upper limit of the communication charge is 19000 yen, so the foregoing reduced amount money is smaller than a difference of the amount money. Therefore, the line selection part 210 requests the line management part 240 to disconnect the PPP link, and returns to the foregoing retrieval of the line classification (step 8b).

Continuously, the line selection part 210 retrieves the line of which the status of the line quality information 500 is on in the ascending order of the utilization priority degree of the line classification of the policy information (step 2b). Herein, the line selection part 210 selects the line of the UMTS#1 because, in succession to 1x#1 of the cdma2000 1x, the utilization priority degree of the UMTS is "2", and its UMTS#1 is in use.

Next, the line classification of the line of which the status is on exists, whereby the charging system thereof is determined (step 4b). The reduced amount money per hour due to the line disconnection in this-time line selection process is calculated from the transmitted/received packet number and the charging rate (step 6b) because the line of the UMTS#1 is a line for which the charge increases with the amount of the packets (step 5b). Herein, the reduced amount money per hour is 14880 yen (0.002¥/packet x (6180000+1260000) packet).

Next, the total sum of the foregoing reduced amount money is compared with a difference of the amount money between the actual value of the increased amount money per hour of the communication charge and the target upper limit of the increased amount money per hour of the communication charge. Herein, the reduced amount money of 1x#1 of the cdma2000 1x is 6660 yen (0.0015¥/packet x (4200000+240000) packet), and the reduced amount money of the UMTS#1 is 14880 yen (0.002¥/packet x (6180000+1260000) packet), so the total sum of the reduced amount money of the increased amount money per hour is 21540 yen. On the other hand, a difference of the amount money between the actual value and the target upper limit of the communication charge is 19000 yen, whereby the foregoing reduced amount money is larger than a difference of the amount money. Therefore, the line selection part 210 calculates the line use rate so that the reduced amount money accords with a difference of the amount money between the actual value and the upper limit (step 10b), and notifies the line classification and the use rate of the line to the line management part 240.

Herein, it is assumed that the line use ratio of the UMTS#1 is 100-(12340/14880 x 100)≒17%. [Example 7]

The entire administration line policy was weighted with the vehicle occupancy ratio in the foregoing examples; however it is not limited hereto, and the entire administration line policy may be weighted with the current position of the train etc. For example, a configuration may be made so that positional information is caused to pre-correspond to the target of the communication rate and the target upper limit of the communication charge, the current position of the train is obtained from a positional information acquirement system such as a GPS, and the target of the communication rate and the target upper limit of the communication charge that correspond hereto are obtained from this positional information. Additionally, the process after acquiring the target of the communication rate and the target upper limit of the communication charge has the operation similar to that of the foregoing examples etc.

## Claims

1. A communication apparatus simultaneously connectable to a plurality of communication systems of an identical type and a different type including a communication system for which a charge increases with an amount of communication, **characterized in** comprising:
an entire administration policy, being information of a target minimum of a communication rate or an upper limit of a communication charge, said target minimum and upper limit obtained by integrating at least a plurality of communication systems;
a line-by-line administration policy, being information for administering each communication system;
communication line quality information, being quality information of a line of each communication system;
statistics information that becomes status information of a line of each communication system; and
a line selecting means for, based upon said line-by-line administration policy, communication line quality information, and statistics information, selecting a line of each communication system so as to satisfy the entire administration policy.

2. The communication apparatus according to claim 1,
**characterized in that**:
said upper limit of said communication charge of said entire administration policy is an upper limit per hour;
said line-by-line administration policy includes a utilization priority degree and a connectable maximum line number set for each communication system;
said statistics information includes a transmitted/received packet number or a communication time of said communication apparatus; and
said line selecting means is configured to select and connect a line of a communication system having the line of which said utilization priority degree is high from among the communication systems in which a communication line quality that is obtained from said communication line quality information is at a communicable level, and yet the number of already connected lines is less than said maximum line number in a case where an actual communication charge per hour calculated from said transmitted/received packet number or communication time is equal to or less than said upper limit per hour, and yet a communication rate calculated from said transmitted/received packet number is equal to or less than said target minimum of said communication rate.

3. The communication apparatus according to claim 1,
**characterized in that**:
said upper limit of said communication charge of said entire administration policy is an upper limit per hour;
said line-by-line administration policy includes a utilization priority degree set for each communication system;
said statistics information includes a transmitted/received packet number or a communication time of said communication apparatus; and
said line selecting means is configured to select a line of a communication system of which said utilization priority degree is low from among the lines of the communication systems in connection, and to disconnect the line of the above communication system in a case where a communication rate calculated from said transmitted/received packet number or communication time is equal to or more than said target minimum of said communication rate, and yet an actual communication charge per hour calculated from said transmitted/received packet number or communication time is equal to or more than said upper limit per hour.

4. The communication apparatus according to claim 1,
**characterized in that**:
said upper limit of said communication charge of said entire administration policy is an upper limit per hour;
said line-by-line administration policy includes a charging system and a utilization priority degree set for each communication system;
said statistics information includes a transmitted/received packet number or a communication time of said communication apparatus; and
said line selecting means is configured to select a line of a communication system of which said utilization priority degree is low from among the lines of the communication systems in connection in a case where a communication rate calculated from said transmitted/received packet number is equal to or more than said target minimum of said communication rate, and yet an actual communication charge per hour calculated from said transmitted/received packet number or communication time is equal to or more than said upper limit per hour, and to suppress a transmission rate in the line of said communication system so that said actual communication charge per hour does not exceed said upper limit per hour in a case where the charging system of this communication system is a system for which a charge increases with an amount of packets.

5. The communication apparatus according to claim 1,
**characterized in that**:
said upper limit of said communication charge of said entire administration policy is an upper limit per hour;
said line-by-line administration policy includes a charging system, a charging rate, and a utilization priority degree set for each communication system;
said statistics information includes a transmitted/received packet number or a communication time of said communication apparatus; and
said line selecting means is configured to select a line of a communication system of which said utilization priority degree is low from among the already connected lines of the communication systems in a case where a communication rate calculated from said transmitted/received packet number or communication time is equal to or more than said target minimum of said communication rate, and yet an actual communication charge per hour calculated from said transmitted/received packet number or communication time is equal to or more than said upper limit per hour, and, in a case where the charging system of this communication system is a system for which a charge increases with an amount of packets, to suppress a transmission rate of the line of said communication system when a communication charge per hour calculated from the charging rate of the line of said communication system and the transmitted/received packet number of the line of said communication system is larger than a difference between said upper limit per hour and said actual communication charge per hour.

6. The communication apparatus according to claim 1,
**characterized in that**:
said upper limit of said communication charge of said entire administration policy is an upper limit per hour;
said line-by-line administration policy includes a charging system, a charging rate, and a utilization priority degree set for each communication system;
said statistics information includes a transmitted/received packet number or a communication time of said communication apparatus; and
said line selecting means is configured to select a line of a communication system of which said utilization priority degree is low from among the already connected lines of the communication systems in a case where a communication rate calculated from said transmitted/received packet number is equal to or more than said target minimum of said communication rate, and yet an actual communication charge per hour calculated from said communication time or transmitted/received packet number is equal to or more than said upper limit per hour, and in a case where the charging system of this communication system is a system for which a charge increases with an amount of packets, to disconnect the line of said communication system only when a communication charge per hour calculated from the charging rate of the line of said communication system and the transmitted/received packet number of said communication system is equal to or less than a difference between said upper limit per hour and said actual communication charge per hour.

7. The communication apparatus according to claim 1,
**characterized in that**:
said statistics information includes a transmitted/received packet number or a communication time of said communication apparatus; and
in a case where a communication charge calculated from said transmitted/received packet number or communication time is equal to or less than said upper limit of said communication charge, yet a communication rate calculated from said transmitted/received packet number is equal to or less than said target minimum of said communication rate, and yet a line having a transmission rate suppressed exists, said line selecting means is configured to remove a suppression of the transmission rate of said line having the transmission rate suppressed.

8. The communication apparatus according to claim 1,
**characterized in that**:
said communication apparatus is mounted onto a mobile machine that moves; and
the entire administration policy of said communication apparatus differs responding to a vehicle occupancy ratio of said mobile machine.

9. The communication apparatus according to claim 1,
**characterized in that**:
said communication apparatus is mounted onto a mobile machine that moves; and
the entire administration policy of said communication apparatus differs responding to a position of said mobile machine.

10. A communication apparatus simultaneously connectable to a plurality of communication systems of an identical type and a different type including a communication system for which a charge increases with an amount of communication, **characterized in** comprising a line selecting means for, based upon a line-by-line administration policy, a communication line quality, and statistics information measured in the communication apparatus, deciding a communication system to which a connection is made.

11. A line selection method of a communication apparatus simultaneously connectable to a plurality of communication systems of an identical type and a different type including a communication system for which a charge increases with an amount of communication, **characterized in** comprising a line selection step of, based upon a line-by-line administration policy, being information for administering each communication system, communication line quality information, being quality information of a line of each communication system, and statistics information that becomes status information of a line of each communication system, selecting a line of each communication system so as to satisfy a target minimum of a communication rate or an upper limit of a communication charge, said target minimum and upper limit obtained by integrating a plurality of communication systems.

12. The line selection method according to claim 11,
**characterized in that**:
said upper limit of said communication charge of said entire administration policy is an upper limit per hour;
said line-by-line administration policy includes a utilization priority degree and a connectable maximum line number set for each communication system;
said statistics information includes a transmitted/received packet number or a communication time of said communication apparatus; and
said line selection step is a step of, in a case where an actual communication charge per hour calculated from said transmitted/received packet number or communication time is equal to or less than said upper limit per hour, and yet a communication rate calculated from said transmitted/received packet number is equal to or less than said target minimum of said communication rate, selecting and connect a line of a communication system having the line of which said utilization priority degree is high from among the communication systems in which a communication line quality that is obtained from said communication line quality information is at a communicable level, and yet the number of already connected lines is less than said maximum line number.

13. The line selection method according to claim 11,
**characterized in that**:
said upper limit of said communication charge of said entire administration policy is an upper limit per hour;
said line-by-line administration policy includes a utilization priority degree set for each communication system;
said statistics information includes a transmitted/received packet number or a communication time of said communication apparatus; and
said line selection step is a step of, in a case where a communication rate calculated from said transmitted/received packet number or communication time is equal to or more than said target minimum of said communication rate, and yet an actual communication charge per hour calculated from said transmitted/received packet number or communication time is equal to or more than said upper limit per hour, selecting a line of a communication system of which said utilization priority degree is low from among the lines of the communication systems in connection, and disconnecting the line of the above communication system.

14. The line selection method according to claim 11,
**characterized in that**:
said upper limit of said communication charge of said entire administration policy is an upper limit per hour;
said line-by-line administration policy includes a charging system and a utilization priority degree set for each communication system;
said statistics information includes a transmitted/received packet number or a communication time of said communication apparatus; and
said line selection step is a step of, in a case where a communication rate calculated from said transmitted/received packet number or communication time is equal to or more than said target minimum of said communication rate, and yet an actual communication charge per hour calculated from said transmitted/received packet number or communication time is equal to or more than said upper limit per hour, selecting a line of a communication system of which said utilization priority degree is low from among the lines of the communication systems in connection, and in a case where a charging system of this communication system is a system for which the charge increases with an amount of packets, suppressing a transmission rate in the line of said communication system so that said actual communication charge per hour does not exceed said upper limit per hour.

15. The line selection method according to claim 11,
**characterized in that**
said upper limit of said communication charge of said entire administration policy is an upper limit per hour;
said line-by-line administration policy includes a charging system, a charging rate, and a utilization priority degree set for each communication system;
said statistics information includes a transmitted/received packet number or a communication time of said communication apparatus; and
said line selection step is a step of, in a case where a communication rate calculated from said transmitted/received packet number or communication time is equal to or more than said target minimum of said communication rate, and yet an actual communication charge per hour calculated from said transmitted/received packet number or communication time is equal to or more than said upper limit per hour, selecting a line of a communication system of which said utilization priority degree is low from among the already connected lines of the communication systems, and in a case where the charging system of this communication system is a system for which a charge increases with an amount of packets, suppressing a transmission rate in the line of said communication system when a communication charge per hour calculated from the charging rate of the line of said communication system and the transmitted/received packet number of the line of said communication system is larger than a difference said upper limit per hour and said actual communication charge per hour.

16. The line selection method according to claim 11,
**characterized in that**:
said upper limit of said communication charge of said entire administration policy is an upper limit per hour;
said line-by-line administration policy includes a charging system, a charging rate, and a utilization priority degree set for each communication system;
said statistics information includes a transmitted/received packet number or a communication time of said communication apparatus; and
said line selection step is a step of, in a case where a communication rate calculated from said transmitted/received packet number is equal to or more than said target minimum of said communication rate, and yet an actual communication charge per hour calculated from said communication time or transmitted/received packet number is equal to or more than said upper limit per hour, selecting a line of a communication system of which said utilization priority degree is low from among the already connected lines of the communication systems, and in a case where the charging system for which a charge increases with an amount of packets, disconnecting the line of said communication system only when a communication charge per hour calculated from the charging rate of the line of said communication system and the transmitted/received packet number of the line of said communication system is equal to or less than a difference between said upper limit per hour and said actual communication charge per hour.

17. The line selection method according to claim 11,
**characterized in that**:
said statistics information includes a transmitted/received packet number or a communication time of said communication apparatus; and
said line selection step is a step of, in a case where a communication charge calculated from said transmitted/received packet number or communication time is equal to or less than said upper limit of said communication charge, yet a communication rate calculated from said transmitted/received packet number is equal to or less than said target minimum of said communication rate, and yet a line having a transmission rate suppressed exists, removing a suppress of the transmission rate of said line having the transmission rate suppressed.

18. The line selection method according to claim 11,
**characterized in that**:
said communication apparatus is mounted onto a mobile machine that moves; and
the entire administration policy of said communication apparatus differs responding to a vehicle occupancy ratio of said mobile machine.

19. The line selection method according to claim 11,
**characterized in that**:
said communication apparatus is mounted onto a mobile machine that moves; and
the entire administration policy of said communication apparatus differs responding to a position of said mobile machine.

20. A line selection method of a communication apparatus simultaneously connectable to a plurality of communication systems of an identical type and a different type including a communication system for which a charge increases with an amount of communication, **characterized in** comprising a line selection step of, based upon a communication line quality, a line-by-line administration policy of said communication system, and statistics information measured in the communication apparatus, deciding a communication system to which a connection is made.

21. A computer-readable program, said computer controlling an operation of a communication apparatus simultaneously connectable to a plurality of communication systems of an identical type and a different type including a communication system for which a charge increases with an amount of communication, **characterized in** comprising a line selection step of, based upon a line-by-line administration policy, being information for administering each communication system, communication line quality information, being quality information of a line of each communication system, and statistics information that becomes status information of a line of each communication system, selecting a line of each communication system so as to satisfy a target minimum of a communication rate or an upper limit of a communication charge, said target minimum and upper limit obtained by integrating a plurality of communication systems.
